# EUROPEAN PATENT SPECIFICATION

(11) **EP 4 664 419 B1**
(45) Date of publication and mention of the grant of the patent: **18.11.2026**
(21) Application number: 24305934.2
(22) Date of filing: 14.06.2024
(51) Int. Cl.: G06V 10/80, G06V 20/40, G06V 10/82

(54) **VIDEO ANOMALY DETECTION METHOD AND SYSTEM**
VERFAHREN UND SYSTEM ZUR ERKENNUNG VON VIDEOANOMALIEN
PROCÉDÉ ET SYSTÈME DE DÉTECTION D'ANOMALIE VIDÉO

(43) Date of publication of application: 17.12.2025
(73) Proprietor: TOYOTA JIDOSHA KABUSHIKI KAISHA, Aichi-ken, 471-8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); KONG, Quan, CHUO-KU, TOKYO, 103-0022 (JP); MAJHI, Snehashis, 06902 VALBONNE (FR); BREMOND, François, 06902 VALBONNE (FR)
(74) Representative: Cabinet Beau de Loménie

(56) References cited:
- MAJHI SNEHASHIS ET AL: "Human-Scene Network: A novel baseline with self-rectifying loss for weakly supervised video anomaly detection", COMPUTER VISION AND IMAGE UNDERSTANDING, ACADEMIC PRESS, US, vol. 241, 15 February 2024 (2024-02-15), XP087485666, ISSN: 1077-3142, [retrieved on 20240215], DOI: 10.1016/J.CVIU.2024.103955

## Description

### BACKGROUND OF THE INVENTION

### 1. Field of the invention

The present disclosure relates to the field of anomaly detection and machine learning, and particularly to a system and method for detecting an anomaly in a video. The system and method may find applications in all kinds of industries, including the automotive industry. For instance, the system and method may be used in the context of computer vision and/or safety-critical applications to understand a vehicle's environment in order to adequately control the vehicle, or to monitor and support human activities in places such as a factory.

### 2. Description of Related Art

Real-world Video Anomaly Detection (VAD) is of high societal impact, as it can furnish surveillance systems with automatic and instantaneous alarms for unusual abnormal events that ensure public safety. Related traditional unsupervised VAD methods learn only from videos comprising normal events and often trigger false alarms for unseen normal scenarios. Towards addressing this limitation, recent weakly-supervised VAD methods generalize better onto unseen events. While such methods are trained with single video-level binary labels, related inference results in frame-level temporal boundaries for abnormal events.

Due to the unavailability of fine-grained temporal annotations for abnormal events, most weakly-supervised VAD-algorithms rely on the pre-computed global snippet/frame-level features from the pre-trained backbones for the optimization employing multiple instance learning (MIL). However, when focusing only on global features, only partial understanding of complex scenarios is achieved, which constitutes a major limitation of recent methods as they may focus on the wrong global semantics: there is a challenge in detecting the significant features in the video while irrelevant features may visually dominate the video.

Thus, there is a need for an improved method and system for detecting an anomaly in a video.

The following references give further background information about machine learning and anomaly detection:
[REF. 1] Ashish Vaswani, Noam Shazeer, Niki Parmar, Jakob Uszkoreit, Llion Jones, Aidan N Gomez, Lukasz Kaiser, and Illia Polosukhin. Attention is all you need. In NeurIPS, 2017.
[REF. 2] Wang, C.Y., Bochkovskiy, A., Liao, H.Y.M.: Yolov7: Trainable bag-of-freebies sets new state-of-the-art for real-time object detectors. In: Proceedings of the IEEE/CVF Conference on Computer Vision and Pattern Recognition. pp. 7464-7475 (2023).
[REF. 3] Yang, D., Wang, Y., Dantcheva, A., Garattoni, L., Francesca, G., Brémond, F.: Unik: A unified framework for real-world skeleton-based action recognition. arXiv preprint arXiv:2107.08580 (2021).
[REF. 4] Radford, A., Kim, J.W., Hallacy, C., Ramesh, A., Goh, G., Agarwal, S., Sastry, G., Askell, A., Mishkin, P., Clark, J., et al.: Learning transferable visual models from natural language supervision. In: International conference on machine learning. pp. 8748-8763. PMLR (2021).
[REF. 5] Dosovitskiy, A., Beyer, L., Kolesnikov, A., Weissenborn, D., Zhai, X., Unterthiner, T., Dehghani, M., Minderer, M., Heigold, G., Gelly, S., et al.: An image is worth 16x16 words: Transformers for image recognition at scale. arXiv preprint arXiv:2010.11929 (2020).
[REF. 6] Majhi, S., Dai, R., Kong, Q., Garattoni, L., Francesca, G., Bremond, F.: Human-scene network: A novel baseline with self-rectifying loss for weakly supervised video anomaly detection. Computer Vision and Image Understanding 241, 103955 (2024).

### SUMMARY

In this respect, the present disclosure relates to a computer-implemented method for detecting an anomaly in a video, comprising:
- obtaining human-related features and scene-related features extracted from the video;
- determining a semantic drift between the human-related features and the scene-related features;
- selectively combining the human-related features and the scene-related features, based on the semantic drift, into an augmented feature map;
- detecting the anomaly based on the augmented feature map.

For the sake of conciseness, this method will be referred to as the anomaly detection method hereinafter.

A video, or video clip, comprises a plurality of image frames following one another over time. The video may show a scene in which one or more human may appear and optionally perform on or more actions. The video may be acquired beforehand or immediately prior to executing the anomaly detection method (i.e. in real-time), e.g. through an image acquisition module such as a camera.

Extracting features from the video implies processing the video to extract a certain representation of the content of the video. The features may be expressed in a so-called feature space or latent space. That processing may be carried by at least one machine learning model. The obtaining the features may comprise extracting the features or getting features extracted in advance.

The human-related features are the features that relate to human presence and behavior within the video. The human-related features may be derived from the results of one or more human-detection models, such as skeleton-type representation of the human beings in the video.

In contrast, the scene-related features are the features that relate to the scene itself (e.g. the landscape, buildings, non-living objects, and the like, but also elements such as weather, water, fire, etc.), independently from the humans possibly present in the scene. The scene-related features may be derived from the results of one or more computer-vision models.

The human-related features and the scene-related features are obtained separately from each other, so that they can be processed independently. Having them separately enables to determine a semantic drift between the human-related features and the scene-related features, the semantic drift representing the behavioral difference or divergence between the human-related features and the scene-related features, or the inconsistency between human and scene temporal behaviors in the video. For instance, there is a semantic drift in the case of an arson, because the scene cues (fire) is inconsistent with respect to the human cues (standing). In another example, there is a semantic drift when a man loiters on a pedestrian crossing, because the scene cues (traffic) is inconsistent with the human cures (e.g. dancing on the road). Further examples of a semantic drift include: in a busy highway with people and vehicle, a car catches fire itself due to an internal short circuit; a bomb explodes at a pedestrian street.

An augmented feature map of the video is obtained by selectively combining the human-related features and the scene-related features based on the semantic drift. The augmented feature map may be expressed in the same latent space as the human-related features and/or the scene-related features, or in another latent space. Obtaining the human-related features and the scene-related features in a dissociative manner and recombining them in a selective manner by considering the semantic drift between them enables to detect the important activity for the anomaly detection, although other elements may dominate the scene. In other words, the semantic drift helps focusing the augmented feature map on either human, scene or both cues, depending on what is relevant to detect anomalies.

Specifically, scene-centric anomalies are often easily detected thanks to strong temporal changes among neighboring snippets, whereas human-centric anomalies are generally characterized by subtle and local motion patterns that are mostly overlooked in global features. For instance, several actors can initiate different activities in the same human-centric video and act as distractors. The semantic drift enables to disentangle and adequately recombine these features to properly detect anomalies.

The detecting the anomaly based on the augmented feature map may comprise a classifying task (e.g. anomaly: YES/NO, or a classification of the type of anomaly and/or the object relating to the anomaly), optionally for each frame of the video, based on the augmented feature map.

The semantic drift is determined based on an output of at least one encoder from an encoder-decoder model configured to compute predicted human-related features from the scene-related features or to compute predicted scene-related features from the human-related features. An encoder-decoder model is a machine learning model comprising an encoder and a decoder, optionally with at least one projection in-between. The encoder is configured to encode an input into a suitable representation in a feature space and the decoder is configured to process this representation to compute an output. If the output is to correspond to the input, the encoder-decoder model is known as an autoencoder. In the present case, the output of the encoder-decoder model may not exactly correspond to the input thereof but to other known features, namely the scene-related features or the human-related features as the case may be. Therefore, it is possible to efficiently train the encoder-decoder model, e.g. by comparing the predicted features to the extracted features.

The proposed encoder-decoder model aims to learn a transformation from the human-related features to the scene-related features or vice versa. In doing so, the encoder-decoder model captures the semantic drift in its latent space representation (namely the output feature space of the encoder). Thus, the semantic drift can be efficiently determined.

In embodiments, the semantic drift may be determined based on an output of at least two such encoders, e.g. a first encoder from an encoder-decoder model configured to compute predicted human-related features from the scene-related features and a second encoder from an encoder-decoder model configured to compute predicted scene-related features from the human-related features. Such a cross-determination provides a more robust determination of the semantic drift.

Optionally, the semantic drift is determined based on the temporal feature variation across neighboring snippets of the video. Neighboring snippets may correspond to adjacent frames of the video. The variation may be obtained by subtracting feature vectors corresponding to said neighboring snippets. Thanks to such a determination, the semantic drift can capture the temporal consistency within the scene-related features and the human-related features, rather than the variance in spatial semantics, which is large and significantly varies between the scene-related features and the human-related features. Accordingly, the semantic drift, corresponding to a temporal semantic drift, can more accurately support the determination of an anomaly.

Optionally, the combining comprises a multistage combining at different temporal scales. Combining the features at different temporal scales enables to operate both at a fine-grained temporal scale to capture sharp cues and at a higher temporal scale to congregate coarse temporal evolution in order to capture subtle cues.

Optionally, the combining is carried out using at least one of a Transformer-based model and a cross-attention module. An attention-based machine learning model is a machine learning model that uses at least one attention mechanism, as known per se in the art ([REF 1], which introduces Transformer models). Attention mechanisms focus on the salient part of the features relative to the target task. Typically, attention mechanisms emphasize the regions of interest which are often crucial to carry out that task. For example, the attention-based machine learning model may be a Transformer-based machine learning model. A Transformer-based model comprises multi-head attention. The cross-attention module may be configured to learn a correlation between the semantic drift and at least one of the human-related features and the scene-related features, in order to detect a mismatch (or, conversely, affinity) between them. Owing to these features, the combining can produce an augmented feature map that is more suitable for detecting anomalies in the video.

Optionally, the combining comprises determining a first correlation between the human-related features and the semantic drift, determining a second correlation between the scene-related features and the semantic drift, and combining the first correlation and second correlation through weighted feature mixing.

Optionally, each stage of the multistage combining comprises the aforementioned steps for determining the first correlation and the second correlation.

Optionally, the detecting comprises associating the augmented feature map to a textual prompt. The textual prompt may characterize the type of anomaly detected. Therefore, the anomaly detection method may provide more useful information about what the detected anomaly is.

Optionally, the detecting comprises identifying a segment of the video comprising the anomaly. A segment of the video may comprise one or more frames of the video.

Optionally, the textual prompt and/or the identified segment are outputted, e.g. to a user through an appropriate output system (display, speaker, light, etc.) and/or to a system (e.g. alarm system, recording system, etc.) for further processing.

The present disclosure further relates to a system for detecting an anomaly in a video, comprising:
- an acquisition module configured to obtain human-related features and scene-related features extracted from the video;
- a drift augmenter module configured to determine a semantic drift between the human-related features and the scene-related features;
- a combination module configured to selectively combine the human-related features and the scene-related features, based on the semantic drift, into an augmented feature map;
- a detection module configured to detect the anomaly based on the augmented feature map.

For the sake of conciseness, this system will be referred to as the anomaly detection system hereinafter. The anomaly detection system may comprise a processor configured to execute the steps of the anomaly detection method according to any one of the aforementioned embodiments, wherein the above-mentioned functional modules are embodied by the processor performing the related functions.

The present disclosure further relates to a computer-implemented training method for the anomaly detection system, comprising updating at least one of the acquisition module, the drift augmenter module, the combination module and the detection module to optimize a loss function over a training dataset. At least one of the acquisition module, the drift augmenter module, the combination module and the detection module may comprise a machine learning model that is trainable through the proposed training method. Optimization (e.g. minimization or maximization) of a loss function may be carried out as known per se in the art, e.g. through stochastic gradient descent (SGD) techniques.

Optionally, the drift augmenter module, the combination module and the detection module are trained jointly. This enables a greater consistency between these modules, hence a more effective anomaly detection. Optionally, at least one of these modules may be pre-trained alone before the joint training, e.g. the drift augmenter module, to further enhance the training performance.

Optionally, the training method further comprises optimizing an auxiliary loss function taking as inputs an output of the detection module and an output of a text inducer configured to predict a category and/or an object associated with the augmented feature map. The text inducer may be configured to output the aforementioned text prompt. The category may be the category of the anomaly and the object may be an object that is the cause of the anomaly or subject to the anomaly.

Optionally, the training is weakly supervised. This means that some level of supervision is provided, that is however more general than the output expected from the anomaly detection system. For instance, the weak supervision may comprise providing training data with video-level annotations whereas the anomaly detection system is configured to output frame-level annotations. Alternatively or in addition, the training may be supervised, self-supervised or unsupervised.

The present disclosure is further related to a computer program set including instructions for executing the steps of the above-described anomaly detection method when said program is executed by at least one computer. This program can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above-described anomaly detection method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram illustrating an anomaly detection method and system according to an embodiment;
- FIG.2 is a block diagram illustrating a drift augmenter module according to an embodiment;
- FIG. 3 is a block diagram illustrating a combination module according to an embodiment;
- FIG. 4 is a block diagram illustrating a text inducer for use during training of an anomaly detection system according to an embodiment.

### DETAILED DESCRIPTION OF EMBODIMENTS

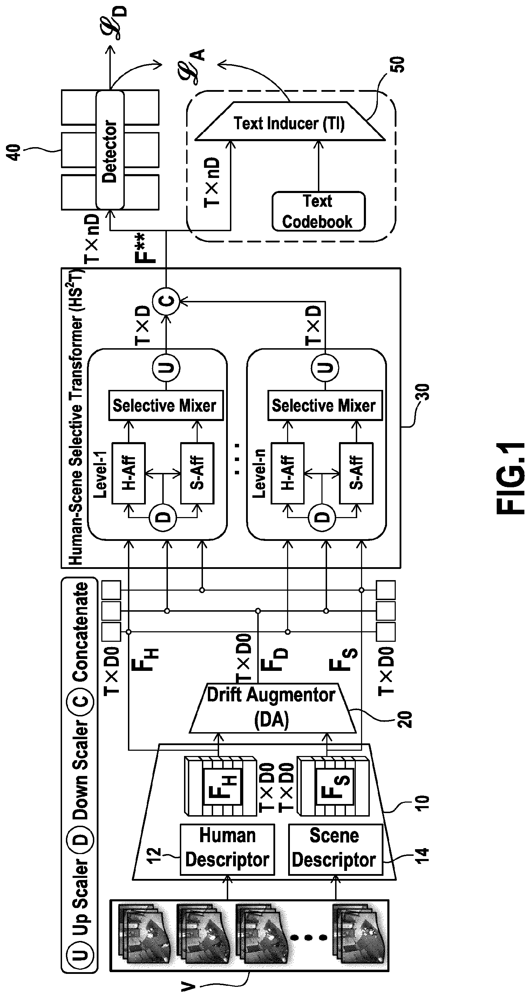

An anomaly detection method and system according to an embodiment is described with reference to Figs. 1-4. An overview of the anomaly detection method and system according to an embodiment is shown in Fig. 1. While Fig. 1 illustrates blocks corresponding to modules of the anomaly detection system, the blocks may be regarded as corresponding steps of the anomaly detection method.

Overall, the proposed anomaly detection method and system aim to temporally detect complex human-scene centric anomaly segments using weakly-labeled training videos. From a general perspective, the anomaly detection system comprises an acquisition module 10 configured to obtain human-related features and scene-related features extracted from an input video, a drift augmenter module 20 configured to determine a semantic drift between the human-related features and the scene-related features, a combination module 30 configured to selectively combine the human-related features and the scene-related features, based on the semantic drift, into an augmented feature map, and a detection module 40 configured to detect the anomaly based on the augmented feature map. Each module will be described in greater detail hereinafter.

### Acquisition module

The acquisition module 10 may be configured to obtain previously extracted human-related features and scene-related features, or to directly extract them from an input video V. For doing so, the acquisition module 10 may comprise a human descriptor (HD) 12 and a scene descriptor (SD) 14 configured to extract the human-related features and the scene-related features, respectively. The human descriptor 12 and the scene descriptor 14 may be independent from each other.

General-purpose feature descriptors may be used. As an example, the human descriptor 12 may extract the frame-level 2D body joints (*J*) of *k* humans from e.g. YoloV7-Pose [REF. 2] and stack them along the temporal dimension (*T*) to obtain ${H}_{J} ∈ {ℝ}^{T \times k \times J}$. Further, to embed the action-representative features to human joints, *H_{J}* may be fed to a pre-trained action-recognition pose backbone, e.g. UNIK [REF. 3], to compute a local human attributed feature map ${F}_{H} ∈ {ℝ}^{T \times k \times D 0}$, where *D*0 is the feature dimension for a given set of *J* joints. However, any other skeleton backbone may be used. Since the real-world setting may have numerous sets of anomaly-irrelevant humans and noise, *max-pool* may be applied across the *k* dimension of *F_{H}* to obtain a salient human feature map (human-related features) ${F}_{H} ∈ {ℝ}^{T \times D 0}$.

As an example, the scene descriptor 14 may extract *D*0 dimensional frame-level spatial features, e.g from CLIP [REF. 4] image encoder, and stack them along the *T* dimension to obtain a global scene feature map (scene-related features) ${E}_{S} ∈ {ℝ}^{T \times D 0}$. However, any other image encoder may be used. Note that the dimensions of the human-related features and the scene-related features may be made to match each other, e.g. through replicating some features across channel dimensions.

At least one of the human descriptor 12 and the scene descriptor 14 may be frozen, i.e. pre-trained and left unchanged by the training of the anomaly detection system that will be described hereinafter.

### Drift augmenter module

The goal of the Drift Augmenter (DA) module 20 is to explicitly capture the existence of a semantic drift between the human-related features and the scene-related features (*i.e., F_{H}* and *F_{S}*)*.* Since *F_{S}* and *F_{H}* are the feature maps from two distinctive modalities, a large variance may exist in spatial semantics. In order to focus the anomaly detection on temporal semantics, the semantic drift may be determined based on the temporal feature variation across neighboring snippets of the video. For instance, DA models the temporal changes (*i.e.,* Δ*F_{S}* and Δ*F_{H}*) to capture the occurrence of anomaly-pertinent semantic drift. The temporal change maps Δ*F_{S}* and Δ*F_{H}* may be obtained by applying an absolute difference operator between the temporal consecutive feature vectors of *F_{S}* and *F_{H}*, optionally followed by *L*₂ normalization across the temporal axis. This operation allows to capture the temporal change (*i.e.,* motion) among the neighboring segments in *F_{S}* and *F_{H}*, and then the *L*₂ normalization preserves the anomaly pertinent direction cues while reducing the irrelevant magnitudes cues of feature vectors. Next, the Δ*F_{S}* and Δ*F_{H}* are fed to DA for capturing the temporal semantic drift among them.

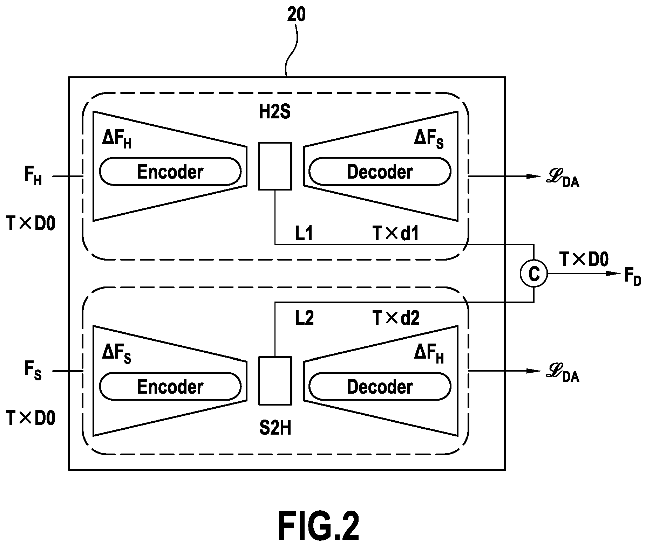

An example of a drift augmenter module 20 is shown in detail in Fig. 2. In this embodiment, the drift augmenter module 20 comprises two parallel encoder-decoder architectures, namely a first encoder-decoder model H2S configured to compute predicted scene-related features from the human-related features and a second encoder-decoder model S2H configured to compute predicted human-related features from the scene-related features. Each encoder-decoder model of the drift augmenter module 20 captures the temporal semantic drift (e.g. high or low) in its respective latent space representation by feeding one modality temporal features at the encoder and reconstructing the other modality temporal features at the decoder end. The feature activation at the latent space will be *high* if the temporal features of both modalities have divergent cues, whereas feature activation can be *low* if both modalities have similar temporal cues. For instance, the H2S and S2H of DA inputs human (Δ*F_{H}*) and scene (Δ*F_{S}*) temporal features, and try to reconstruct corresponding Δ*F_{S}* and Δ*F_{H}* with the following loss 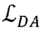 (in Eq. (1)). ${L}_{DA} \left(Δ{F}_{H},Δ{F}_{S}\right) = {{{\left‖Δ{F}_{S}-{\hat{Δ F}}_{S}\right‖}_{2}}_{︸}}_{E 1 : H 2 S} + {{{\left‖Δ{F}_{H}-{\hat{Δ F}}_{H}\right‖}_{2}}_{︸}}_{E 2 : S 2 H}$ (1) where, ${\hat{Δ F}}_{S} , {\hat{Δ F}}_{H}$ are the reconstruction outputs of H2S and S2H respectively. With 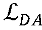 *,* H2S learns the latent feature *L*1 with the reconstruction error *E*1 and S2H learns the latent feature *L*2 with thereconstruction error *E*2. For a given training video, if the abnormal temporal segments have small human motion and sharp irrelevant scene motion, the reconstruction errors *E*1 and *E*2 of H2S and S2H will be *high.* As a result, the latent features *L*1 and *L*2 will have *high* activation encoding to indicate the *high* semantic drift. In contrast, if the abnormal temporal segments have similar human and scene motion cues (e.g. may be sharp or subtle), *E*1 and *E*2 will be low, and as a result, the feature activation encoded at *L*1 and *L*2 will be *low* as well to indicate a *low* semantic drift. In other words, the latent features *L*1 is the output of the encoder of H2S and the latent features *L*2 is the output of the encoder of S2H.

Besides, for a given pair of human and scene temporal feature maps, *i.e.* $Δ {F}_{H} ∈ {ℝ}^{T \times D 0}$ and $Δ {F}_{S} ∈ {ℝ}^{T \times D 0}$, the drifts encoded in the latent features $L 1 ∈ {ℝ}^{T \times {d}_{1}}$ and $L 2 ∈ {ℝ}^{T \times d 2}$ may be concatenated across the channel dimension to generate the semantic drift ${F}_{D} ∈ {ℝ}^{T \times D 0}$ (where *D*0 = *d*₁ *+ d*₂)*.*

### Combination module

The aim of the combination module 30 is to selectively combine the human-related features and the scene-related features in a way that reflects discriminative representations for human or scene-related anomalies with respect to normal events. For doing so, the combination module 30 receives as inputs not only the human-related features *F_{H}* and the scene-related features *F_{S}*, but also the semantic drift *F_{D}.*

As shown in Fig. 1, the combination module 30 may be configured to determine a first correlation H-Aff between the human-related features and the semantic drift, to determine a second correlation S-Aff between the scene-related features and the semantic drift, and to combine the first correlation H-Aff and the second correlation S-Aff through weighted feature mixing. In other words, the combination module 30 may first dissociatively encode the respective temporal correlation between the human-related and scene-related features with the drift-augmented features and then combining these correlations by encouraging the higher drift-correlated modality. Downscaling and upscaling may be provided as appropriate, as shown in Fig. 1.

Optionally, this combination can be carried out in a multistage manner, at a plurality of temporal scales: since human and scene-centric anomalies are often characterized by divergent cues (*e.g*., subtle and sharp temporal evolution), contextual and fine-grained temporal relation encoding is helpful to capture sharp and subtle temporal cues respectively. As shown in Figure 1, a multistage design of the combination module 30 enables to encode the temporal cues for human and scene modalities followed by semantic feature mixing at multiple temporal scales. For instance, the lowest level (*Level -* 1) operates at the fine-grained temporal scale to capture sharp cues, whereas the highest level (*Level - n*) gathers coarse temporal evolution for subtle cues. Other stages in-between may operate at intermediate temporal scales, e.g. with stage *i* operating at scale *T*/2^{*i*-1}.

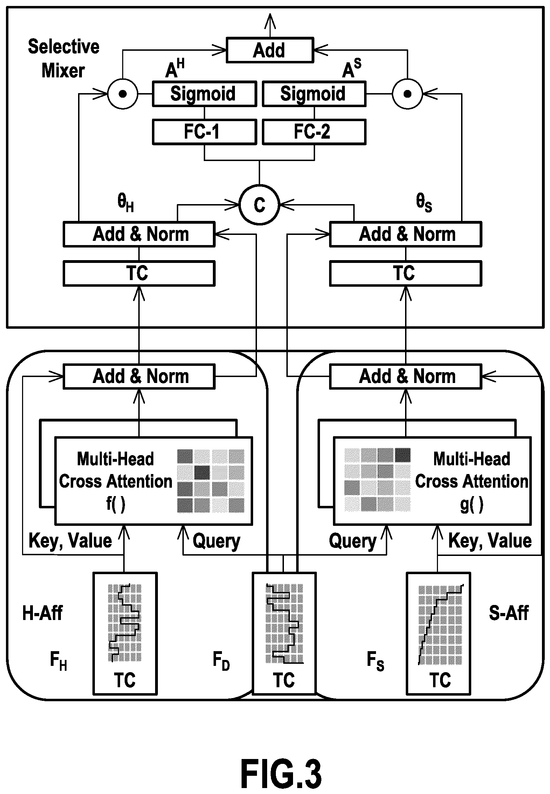

An example of the detailed architecture of the i-th stage of the combination module 30 is shown in Fig. 3, excluding the aforementioned down and up scaler (refer to Fig. 1). As inputs, the i-th stage may receive three feature maps, namely the human-related features: ${F}_{H} ∈ {ℝ}^{T \times D 0}$, the scene-related features: ${F}_{S} ∈ {ℝ}^{T \times D 0}$, and the semantic drift: ${F}_{D} ∈ {ℝ}^{T \times D 0}$. The i-th stage is configured to jointly process these feature maps at a particular temporal scale. First, all three input feature maps may be down-sampled with a scaling factor (*i*), where *i* ∈ 0,1, ... , *n* - 1 and then projected into three parallel temporal convolution (TC) layers, each having *m*₁ 1D conv filters with kernel size e.g. *k* ∈ {3}. These local projections are made to enhance the temporal semantics by encouraging the neighboring temporal change. In an example, *n* may be between 1 and 5, preferably between 2 and 4, preferably 3.

Next, the temporally enhanced *F_{H}* and *F_{S}* features are processed dissociatively in H-Aff and S-Aff, respectively to capture the correlation with *F_{D}.* H-Aff and S-Aff perform identical operations with distinct input pairs (*i.e.,* H-Aff: (*F_{H}, F_{D}*) and S-Aff: (*F_{S}, F_{D}*)). The mutual affinity weights (or correlation) may be encoded by multi-head cross attention (MHCA), e.g. as in [REF. 5], with distinct functional blocks (*i.e. f*(), *g*() respectively). More generally, the combining may be carried out using at least one of a Transformer-based model and a cross-attention module. In such case, the combination module may also be referred to as a Human-Scene Selective Transformer (HS²T).

In the present example, *f*() treats *F_{H}* as the *key* and *value,* whereas *F_{D}* as the *query* for MHCA input. Similarly, g() treats *F_{S}* as the *key* and *value,* whereas *F_{D}* as the *query* for MHCA input. Each head of *f*() and *g*() can encode the correlation between the human-to-drift and scene-to-drift features respectively. Next, the correlation maps generated from all heads of *f*() and *g*() are *concatenated* separately. The resultant may then be added and normalized through a skip-connection to the respective *value* of *f*() and *g*() for retaining the temporal inductive bias of input feature maps. The number of heads for multi-head attention may be set between 2 and 6, e.g. between 2 and 4.

Next, the individual correlation-encoded maps are fed to a selective mixer parallelly to promote weighted feature mixing. The selective mixer aims to compute two attention weights *(i.e., A^{H}* and *A^{S}*) which are coupled with the resultant of H-Aff and S-Aff, respectively to highlight salient cues among them. For this, the selective mixer may first parallelly apply temporal convolutions (TC) to the resultants of H-Aff and S-Aff to locally mix the correlation maps across temporal dimensions. For instance, the TC has *m*₂ 1D conv filters with kernel size *k* ∈ {3} and dilation rate *d* ∈ {2}. For instance, *m*₂ is between 32 and 256, preferably between 64 and 128. Then, the resultants of H-Aff and S-Aff may be added and normalized in two parallel *Add & Norm layers* with their respective TCs outcomes to carry forward the human and scene-based inductive biases along with the drift affinity weights. The outputs of parallel *Add & Norm layers* are denoted as *θ_{H}* and *θ_{S}* as intermediate representations of the human-related features and the scene-related features. Next, *θ_{H}* and *θ_{S}* may be concatenated and then projected, for instance, to two FC layers (FC-1 & FC-2 in Fig. 3) each with a single neuron. The outcome of the two FC layers is then (e.g. *sigmoid*-)activated to compute the selection likelihoods *A^{H}* and *A^{S}* in a mutually exclusive manner for feature mixing. More generally, the *A^{H}* and *A^{S}* may be computed such that:
- for divergent features of human and scene, *A^{H}* is greater than *A^{S}* if H-Aff has higher correlation than S-Aff (i.e., salient cues of humans), and *A^{S}* is greater than *A^{H}* if S-Aff has higher correlation than H-Aff, (i.e. salient cues of scene);
- for similar features of human and scene the *A^{S}* is equivalent to *A^{H}* (i.e., similar likelihood to humans and scene).

For the *i-th* level of the combination module 30, the *A^{H}* and *A^{S}* are *dot-product*(⊙ ) multiplied by the corresponding intermediate representations *(i.e., θ_{H}* and *θ_{S}* respectively) and the resultants are added to each other to obtain a *T* × *D* dimensional weighted feature mixing map of human and scene. Further, as the combination module 30 may follow multi-level design, the selective feature mixing takes fine-grained to contextual temporal representations into account. Finally, as the case may be, the *T* × *D* dimensional entangled features map from *n* levels of HS²T may be concatenated across the channel axis (*i.e. D*) to obtain a human-scene augmented feature map $F * * ∈ {ℝ}^{T \times nD}$.

### Detection module

Back to Fig. 1, a detection module 40 is provided to detect whether the video comprises an anomaly based on the augmented feature map *F***. For instance, the detection module 40 may comprise a multi-layer perceptron (MLP), e.g. with three *fully-connected* (FC) layers which assign anomaly scores to each *T* of $F * * ∈ {ℝ}^{T \times nD}$. The final layer of MLP may have a single neuron with e.g. sigmoid activation to output a score map $S ∈ {ℝ}^{T \times 1}$. In particular, it is noteworthy that the detection module 40 is configured to output an anomaly score for each frame of the video. More generally, the detecting may comprise identifying a segment of the video comprising the anomaly. The anomaly score may be compared to a threshold to determine whether a given frame belongs to an abnormal segment.

### Training and text inducer

As discussed above, the acquisition module 10, the drift augmenter module 20, the combination module 30 and the detection module 40 each comprise at least one machine learning model. As a consequence, the anomaly detection system may be trained by any suitable training method in order to update at least one of the aforementioned modules. The training method may comprise optimizing a loss function over a training dataset, as known per se in the art. The training may be supervised, unsupervised, self-supervised or, advantageously in the present case, weakly supervised: as mentioned above, the training videos may have a video-level annotation, whereas the anomaly detection system is configured to produce segment-level or even frame-level anomaly predictions.

The anomaly detection system may be trained end-to-end, e.g. the drift augmenter module 20, the combination module 30 and the detection module 40 may be trained jointly. As will be detailed hereinafter, a joint loss function may comprise respective loss functions for each of the aforementioned modules, combined with suitable weights. The joint training may take place for batches of human and scene-based video feature maps.

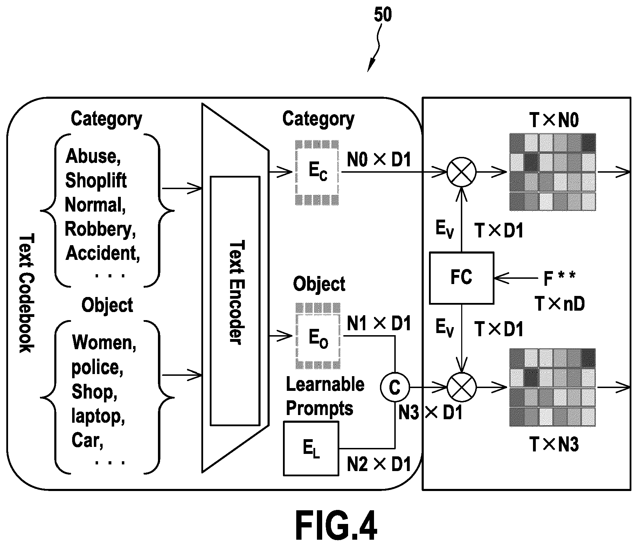

Besides, a text inducer (TI) 50 may be used during training (shown by the dashes in the right-bottom corner of Fig. 1) to enhance feature mixing in the combination module 30, e.g. by semantically associating textual feature and human-scene augmented visual features (i.e. the augmented feature map *F***). Specifically, the text inducer 50 semantically contrasts the class-specific vision language cues to promote better feature mixing in the combination module 30. As shown in detail in Fig. 4, such an association may be learned by computing the video-to-category (*M_{c}*) and video-to-object (*Mₒ*) maps. For this, the text inducer 50 first separately inputs a pre-defined text codebook that has *D*1 dimensional embedding for each text feature. In an example, for greater consistency with the scene descriptor 14, the pre-trained frozen CLIP text encoder may be used to construct the text codebook. The text codebook may have three types of embeddings: (i) abnormal category text ${E}_{C} ∈ {ℝ}^{{N}_{0} \times D 1}$, (ii) object text ${E}_{O} ∈ {ℝ}^{{N}_{1} \times D 1}$, (iii) learnable text ${E}_{L} ∈ {ℝ}^{{N}_{2} \times D 1}$, where *D*1 is the embedding vector dimension and *N*₀*, N*₁, *N*₂ are the number of abnormal categories, objects and learnable queries present in text codebook. The goal of learnable queries *E_{L}* is to iteratively update the text codebook with the missing object information in the predefined *E_{O}*. Then, the human-scene augmented feature map $F * * ∈ {ℝ}^{T \times nD}$ is projected to a *FC* layer with *D*1 units for making the vision and text embedding dimensions analogous. The output of FC layer is denoted by ${E}_{V} ∈ {ℝ}^{T \times D 1}$. Now, to define the correspondence between T temporal regions and *N*₀ abnormal category features, the video-to-category map ${M}_{c} ∈ {ℝ}^{T \times {N}_{0}}$ is constructed. *M_{c}* may be computed by *softmax*(*E_{V}* ⊗ *E_{C}*)*,* ⊗ being the Kronecker product. Similarly, the video-to-object map ${M}_{o} ∈ {ℝ}^{T \times {N}_{3}}$ may be constructed to define the correspondence between *T* temporal regions and *N*₃ object features, where *N*₃ *= concat*(*N*₁ *+ N*₂). *Mₒ* is computed by *softmax*(*E_{V}* ⊗ *concat*(*E_{O},E_{L}*)). The *M_{c}* and *Mₒ* learn the vision-text correspondence maps dissociatively while being abnormally agnostic. To learn anomaly-aware features, an auxiliary loss function 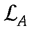 may be applied, that semantically binds *M_{c}* and *Mₒ* by focusing on the abnormal temporal segments obtained from the detector score map $S ∈ {ℝ}^{T \times 1}$. ${L}_{A} \left(S, {M}_{c}, {M}_{o}\right) = {\sum }_{i = 1}^{T} \left({S}^{i}\right) ln \frac{{S}^{i}}{{\left‖{\sum }_{i = 1}^{k ∈ N 0} t {op}_{k} \left({M}_{c}\right) - {\sum }_{i = 1}^{N 3} {M}_{o}\right‖}_{2}}$ (2)

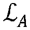 takes as inputs the temporal prediction score *S*, video-to-category (*M_{c}*)*,* and video-to-object (*Mₒ*) maps. It first applies a *mean-squared-error* between *M_{c}* and *Mₒ* to associate salient (*e.g., topₖ* activated categories) abnormal class level semantics with all possible object-level semantics (*e.g.*, sum of all activated objects). Then, the divergence between the visual anomaly confidence score *S* and the resultant of *mean-squared-error*(*M_{c},Mₒ*) is minimized via a *KL - Divergence* loss to encourage anomaly vision-language feature learning.

The H2S and S2H of DA are optimized using 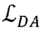 (as in Eq. (1)). The combination module 30 and the detection module 40 take both, normal and anomaly batches of video feature maps into account to compute the normal ( ${S}_{n} ∈ {ℝ}^{T}$) and anomaly ( ${S}_{a} ∈ {ℝ}^{T}$) temporal scores and optimize themselves with a self-rectifying loss: 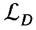 proposed by [REF. 6]. Finally, the text inducer 50 operates as an auxiliary-task head and optimizes itself with 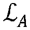 (as in (2)) to complement the visual features with the textual semantics. In other words, the training comprises optimizing the auxiliary loss function 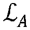 taking as inputs an output of the detection module 40 and an output of the text inducer 50 configured to predict a category and/or an object associated with the augmented feature map *F***. The overall objective (loss) function of the anomaly detection system may be defined as 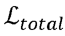 *= β*₁ 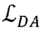 (Δ*F_{H},*Δ*F_{S}*) + *β*₂ 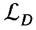 (*Sₐ*,*Sₙ*) *+ β₃* 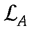 (*S,M_{c},Mₒ*), where *β*₁, *β*₂, and *β*₃ are loss weighting factors.

Furthermore, thanks to the text inducer 50, the detection module is able to associate a textual prompt to the augmented feature map *F***.

### Variants

An ablation study conducted by the inventors shows that although the proposed embodiment of the anomaly detection system performs best for the selected metrics (e.g. frame-level AUC, known *per se* in the art), good results can nevertheless be obtained with more simple embodiments. For instance, training with the text inducer 50 is not necessary. Besides, instead of taking into account the encoder output from H2S and S2H, only one of those may be used, or more simply, the human-related features and the scene-related feature may merely be concatenated or otherwise combined, e.g. through average, maxpool, absolute difference or the like. More generally, the drift augmenter module 20 is flexible enough to adapt any desired state-of-the-art approach for capturing the semantic drift, e.g. temporal autoencoders, spatio-temporal autoencoders or UNet. In other words, different designs may be chosen for the drift augmenter module 20.

As regards the combining module, the selecting mixer as proposed may be replaced by another type of selective combination, e.g. a mere MLP. More generally, the proposed i-th stage of the combination module may be replaced by a simpler merged and cross-attention block. Besides, the number of layers may be changed. Other embodiments and variations are still possible.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

The invention is defined by the appended claims.

## Claims

1. A computer-implemented method for detecting an anomaly in a video, comprising:
- obtaining human-related features (*F_{H}*) and scene-related features (*F_{S}*) extracted from the video;
- determining a semantic drift (*F_{D}*) between the human-related features (*F_{H}*) and the scene-related features (*F_{S}*) based on an output of at least one encoder from an encoder-decoder model (H2S, S2H) configured to compute predicted human-related features from the scene-related features (*F_{S}*) or to compute predicted scene-related features from the human-related features (*F_{H}*), wherein the semantic drift (*F_{D}*) represents the behavioral difference or divergence between the human-related features (*F_{H}*) and the scene-related features (*F_{S}*);
- selectively combining the human-related features (*F_{H}*) and the scene-related features (*F_{S}*), based on the semantic drift (*F_{D}*), into an augmented feature map (*F***);
- detecting the anomaly based on the augmented feature map (*F***).

2. The method of claim 1, wherein the semantic drift (*F_{D}*) is determined based on the temporal feature variation across neighboring snippets of the video.

3. The method of claim 1 or 2, wherein the combining comprises a multistage combining at different temporal scales.

4. The method of any one of claims 1 to 3, wherein the combining is carried out using at least one of a Transformer-based model and a cross-attention module.

5. The method of any one of claims 1 to 4, wherein the combining comprises determining a first correlation between the human-related features (*F_{H}*) and the semantic drift (*F_{D}*), determining a second correlation between the scene-related features (*F_{S}*) and the semantic drift (*F_{D}*), and combining the first correlation and second correlation through weighted feature mixing.

6. The method of any one of claims 1 to 5, wherein the detecting comprises associating the augmented feature map (F**) to a textual prompt.

7. The method of any one of claims 1 to 6, wherein the detecting comprises identifying a segment of the video comprising the anomaly.

8. A system for detecting an anomaly in a video, comprising:
- an acquisition module (10) configured to obtain human-related features (*F_{H}*) and scene-related features (*F_{S}*) extracted from the video;
- a drift augmenter module (20) configured to determine a semantic drift (*F_{D}*) between the human-related features (*F_{H}*) and the scene-related features (*F_{S}*) based on an output of at least one encoder from an encoder-decoder model (H2S, S2H) configured to compute predicted human-related features from the scene-related features (*F_{S}*) or to compute predicted scene-related features from the human-related features (*F_{H}*), wherein the semantic drift (*F_{D}*) represents the behavioral difference or divergence between the human-related features (*F_{H}*) and the scene-related features (*F_{S}*);
- a combination module (30) configured to selectively combine the human-related features (*F_{H}*) and the scene-related features (*F_{S}*), based on the semantic drift (*F_{D}*), into an augmented feature map (*F***);
- a detection module (40) configured to detect the anomaly based on the augmented feature map (*F***).

9. A computer-implemented training method performed on the system of claim 8, comprising updating at least one of the acquisition module (10) , the drift augmenter module (20), the combination module (30) and the detection module (40) to optimize a loss function over a training dataset.

10. The training method of claim 9, wherein the drift augmenter module (20), the combination module (30) and the detection module (40) are trained jointly.

11. The training method of claim 9 or 10, further comprising optimizing an auxiliary loss function taking as inputs an output of the detection module (40) and an output of a text inducer (50) configured to predict a category and/or an object associated with the augmented feature map (*F***).

12. The training method of any one of claims 9 to 11, wherein the training is weakly supervised.

13. A computer program set including instructions for executing the steps of the method of any one of claims 1 to 7 when said program set is executed by at least one computer.

14. A recording medium readable by at least one computer and having recorded thereon at least one computer program including instructions for executing the steps of the method of any one of claims 1 to 7.

## Patentansprüche

1. Computerumgesetztes Verfahren zum Erkennen einer Anomalie in einem Video, umfassend:
- Erzielen von menschenbezogenen Merkmalen (F_{H}) und von szenenbezogenen Merkmalen (F_{S}), die aus dem Video extrahiert werden;
- Bestimmen einer semantischen Verschiebung (F_{D}) zwischen den menschenbezogenen Merkmalen (F_{H}) und den szenenbezogenen Merkmalen (F_{S}) basierend auf einer Ausgabe mindestens eines Codierers von einem Codierer-Decodierer-Modell (H2S, S2H), das dazu konfiguriert ist, vorhergesagte menschenbezogene Merkmale aus den szenenbezogenen Merkmalen (F_{S}) zu berechnen oder vorhergesagte szenenbezogene Merkmale aus den menschenbezogenen Merkmalen (F_{H}) zu berechnen, wobei die semantische Verschiebung (F_{D}) die Verhaltensdifferenz oder - divergenz zwischen den menschenbezogenen Merkmalen (F_{H}) und den szenenbezogenen Merkmalen (F_{S}) darstellt;
- selektives Kombinieren der menschenbezogenen Merkmale (F_{H}) und der szenenbezogenen Merkmale (F_{S}) basierend auf der semantischen Verschiebung (F_{D}) zu einer erweiterten Merkmalskarte (F**);
- Erkennen der Anomalie basierend auf der erweiterten Merkmalskarte (F**).

2. Verfahren nach Anspruch 1, wobei die semantische Verschiebung (F_{D}) basierend auf der zeitlichen Merkmalsvariation über benachbarte Schnipsel des Videos hinweg bestimmt wird.

3. Verfahren nach Anspruch 1 oder 2, wobei das Kombinieren ein mehrstufiges Kombinieren in verschiedenen zeitlichen Maßstäben umfasst.

4. Verfahren nach einem der Ansprüche 1 bis 3, wobei das Kombinieren unter Verwendung mindestens eines von einem Transformerbasierten Modell und einem Überkreuz-Aufmerksamkeits-Modul ausgeführt wird.

5. Verfahren nach einem der Ansprüche 1 bis 4, wobei das Kombinieren das Bestimmen einer ersten Korrelation zwischen den menschenbezogenen Merkmalen (F_{H}) und der semantischen Verschiebung (F_{D}), das Bestimmen einer zweiten Korrelation zwischen den szenenbezogenen Merkmalen (F_{S}) und der semantischen Verschiebung (F_{D}) und das Kombinieren der ersten Korrelation und der zweiten Korrelation durch gewichtetes Merkmalsmischen umfasst.

6. Verfahren nach einem der Ansprüche 1 bis 5, wobei das Erkennen das Zuordnen der erweiterten Merkmalskarte (F**) zu einer Textabfrage umfasst.

7. Verfahren nach einem der Ansprüche 1 bis 6, wobei das Erkennen das Identifizieren eines Segments des Videos umfasst, das die Anomalie umfasst.

8. System zum Erkennen einer Anomalie in einem Video, umfassend:
- ein Erfassungsmodul (10), das dazu konfiguriert ist, menschenbezogene Merkmale (F_{H}) und szenenbezogene Merkmale (F_{S}), die aus dem Video extrahiert werden, zu erzielen;
- ein Verschiebungsverstärkungsmodul (20), das dazu konfiguriert ist, eine semantische Verschiebung (F_{D}) zwischen den menschenbezogenen Merkmalen (F_{H}) und den szenenbezogenen Merkmalen (F_{S}) basierend auf einer Ausgabe mindestens eines Codierers von einem Codierer-Decodierer-Modell (H2S, S2H), das dazu konfiguriert ist, vorhergesagte menschenbezogene Merkmale aus den szenenbezogenen Merkmalen (F_{S}) zu berechnen, oder vorhergesagte szenenbezogene Merkmale aus den menschenbezogenen Merkmalen (F_{H}) zu berechnen, zu bestimmen, wobei die semantische Verschiebung (F_{D}) die Verhaltensdifferenz oder -divergenz zwischen den menschenbezogenen Merkmalen (F_{H}) und den szenenbezogenen Merkmalen (F_{S}) darstellt;
- ein Kombinationsmodul (30), das dazu konfiguriert ist, die menschenbezogenen Merkmale (F_{H}) und die szenenbezogenen Merkmale (F_{S}) basierend auf der semantischen Verschiebung (F_{D}) zu einer erweiterten Merkmalskarte (F**) selektiv zu kombinieren;
- ein Erkennungsmodul (40), das dazu konfiguriert ist, die Anomalie basierend auf der erweiterten Merkmalskarte (F**) zu erkennen.

9. Computerumgesetztes Trainingsverfahren, das auf dem System nach Anspruch 8 ausgeführt wird, umfassend
Aktualisieren mindestens eines von dem Erfassungsmodul (10), dem Verschiebungsverstärkungsmodul (20), dem Kombinationsmodul (30) und dem Erkennungsmodul (40), um eine Verlustfunktion für einen Trainingsdatensatz zu optimieren.

10. Trainingsverfahren nach Anspruch 9, wobei das Verschiebungsverstärkungsmodul (20), das Kombinationsmodul (30) und das Erkennungsmodul (40) zusammen trainiert werden.

11. Trainingsverfahren nach Anspruch 9 oder 10, ferner umfassend das Optimieren einer Hilfsverlustfunktion, die als Eingaben eine Ausgabe des Erkennungsmoduls (40) und eine Ausgabe eines Textauslösers (50), der dazu konfiguriert ist, eine Kategorie und/oder ein Objekt vorherzusagen, die der erweiterten Merkmalskarte (F**) zugeordnet sind, annimmt.

12. Trainingsverfahren nach einem der Ansprüche 9 bis 11, wobei das Training schwach überwacht wird.

13. Computerprogrammsatz, der Anweisungen zum Ausführen der Schritte des Verfahrens nach einem der Ansprüche 1 bis 7 umfasst, wenn der Programmsatz durch mindestens einen Computer ausgeführt wird.

14. Aufzeichnungsmedium, das durch mindestens einen Computer lesbar ist, und auf dem mindestens ein Computerprogramm aufgezeichnet ist, das Anweisungen umfasst, um die Schritte des Verfahrens nach einem der Ansprüche 1 bis 7 auszuführen.

## Revendications

1. Procédé mis en œuvre par ordinateur destiné à détecter une anomalie dans une vidéo, comprenant les étapes suivantes :
- obtenir des caractéristiques relatives à un être humain (F_{H}) et des caractéristiques liées à une scène (F_{S}) extraites de la vidéo ;
- déterminer une dérive sémantique (F_{D}) entre les caractéristiques relatives à un être humain (F_{H}) et les caractéristiques liées à une scène (F_{S}) sur la base d'une sortie d'au moins un encodeur provenant d'un modèle encodeur-décodeur (H2S, S2H) configuré pour calculer des caractéristiques relatives à un être humain prédites à partir des caractéristiques liées à une scène (F_{S}), ou pour calculer des caractéristiques liées à la scène prédites à partir des caractéristiques relatives à un être humain (F_{H}), dans lequel la dérive sémantique (F_{D}) représente la différence ou la divergence comportementale entre les caractéristiques relatives à un être humain (F_{H}) et les caractéristiques liées à une scène (F_{S}) ;
- combiner sélectivement les caractéristiques relatives à un être humain (F_{H}) et les caractéristiques liées à une scène (F_{S}) sur la base de la dérive sémantique (F_{D}) dans une carte de caractéristiques augmentée (F**) ;
- détecter l'anomalie sur la base de la carte de caractéristiques augmentée (F**).

2. Procédé selon la revendication 1, dans lequel la dérive sémantique (F_{D}) est déterminée sur la base de la variation temporelle de caractéristiques entre des extraits voisins de la vidéo.

3. Procédé selon la revendication 1 ou 2, dans lequel la combinaison comprend une combinaison multi-stade à différentes échelles temporelles.

4. Procédé selon l'une des revendications 1 à 3, dans lequel la combinaison est effectuée à l'aide d'au moins un parmi un modèle basé sur un Transformeur et un module d'attention croisée.

5. Procédé selon l'une des revendications 1 à 4, dans lequel la combinaison comprend la détermination d'une première corrélation entre les caractéristiques relatives à un être humain (F_{H}) et la dérive sémantique (F_{D}), la détermination d'une deuxième corrélation entre les caractéristiques liées à une scène (F_{S}) et la dérive sémantique (F_{D}), et la combinaison de la première corrélation et de la deuxième corrélation par un mélange pondéré de caractéristiques.

6. Procédé selon l'une des revendications 1 à 5, dans lequel la détection comprend l'association de la carte de caractéristiques augmentée (F**) à une requête textuelle.

7. Procédé selon l'une des revendications 1 à 6, dans lequel la détection comprend l'identification d'un segment de la vidéo comprenant l'anomalie.

8. Système destiné à détecter une anomalie dans une vidéo, comprenant :
- un module d'acquisition (10) configuré pour obtenir des caractéristiques relatives à un être humain (F_{H}) et des caractéristiques liées à une scène (F_{S}) extraites de la vidéo ;
- un module d'augmentation de dérive (20) configuré pour déterminer une dérive sémantique (F_{D}) entre les caractéristiques relatives à un être humain (F_{H}) et les caractéristiques liées à une scène (F_{S}) sur la base d'une sortie d'au moins un encodeur provenant d'un modèle encodeur-décodeur (H2S, S2H) configuré pour calculer des caractéristiques relatives à un être humain prédites à partir des caractéristiques liées à une scène (F_{S}), ou pour calculer des caractéristiques liées à la scène prédites à partir des caractéristiques relatives à un être humain (F_{H}), dans lequel la dérive sémantique (F_{D}) représente la différence ou la divergence comportementale entre les caractéristiques relatives à un être humain (F_{H}) et les caractéristiques liées à une scène (F_{S}) ;
- un module de combinaison (30) configuré pour combiner sélectivement les caractéristiques relatives à un être humain (F_{H}) et les caractéristiques liées à une scène (F_{S}) sur la base de la dérive sémantique (F_{D}) dans une carte de caractéristiques augmentée (F**) ;
- un module de détection (40) configuré pour détecter l'anomalie sur la base de la carte de caractéristiques augmentée (F**).

9. Procédé d'entraînement mis en œuvre par ordinateur réalisé sur le système selon la revendication 8, comprenant la mise à jour d'au moins un parmi le module d'acquisition (10), le module d'augmentation de dérive (20), le module de combinaison (30) et le module de détection (40) afin d'optimiser une fonction de perte sur un ensemble de données d'entraînement.

10. Procédé d'entraînement selon la revendication 9, dans lequel le module d'augmentation de dérive (20), le module de combinaison (30) et le module de détection (40) sont entraînés conjointement.

11. Procédé d'entraînement selon la revendication 9 ou 10, comprenant en outre l'optimisation d'une fonction de perte auxiliaire prenant comme entrées une sortie du module de détection (40) et une sortie d'un inducteur de texte (50) configuré pour prédire une catégorie et/ou un objet associé à la carte de caractéristiques augmentée (F**).

12. Procédé d'entraînement selon l'une des revendications 9 à 11, dans lequel l'entraînement est faiblement supervisé.

13. Ensemble de programmes informatiques comprenant des instructions pour exécuter les étapes du procédé selon l'une des revendications 1 à 7 lorsque ledit ensemble de programmes est exécuté par au moins un ordinateur.

14. Support d'enregistrement lisible par au moins un ordinateur et sur lequel est enregistré au moins un programme informatique comportant des instructions pour exécuter les étapes du procédé selon l'une des revendications 1 à 7.
